# EUROPÄISCHE PATENTSCHRIFT

(11) **EP 3 794 369 B1**
(45) Veröffentlichungstag und Bekanntmachung des Hinweises auf die Patenterteilung: **24.12.2025**
(21) Anmeldenummer: 19709711.6
(22) Anmeldetag: 07.03.2019
(51) Int. Cl.: G01S 7/40, G01S 13/931, G01S 7/42, G01S 13/34, G01S 13/42, G01S 13/58, G01S 13/536, G01S 7/03, G01S 13/87, G01S 13/02

(54) **VERFAHREN ZUR PHASENKALIBRIERUNG VON HOCHFREGUENZBAUSTEINEN EINES RADARSENSORS**
METHOD FOR PHASE CALIBRATION OF RF INTEGRATED CIRCUITS IN A RADAR SENSOR
PROCÉDÉ POUR CALIBRATION DES PHASES DES CIRCUITS INTÉGRÉS À HAUTE FRÉQUENCE DANS UN CAPTEUR RADAR

(30) Priorität: 17.05.2018 DE 102018207718
(43) Veröffentlichungstag der Anmeldung: 24.03.2021
(73) Patentinhaber: Robert Bosch GmbH, 70442 Stuttgart (DE)
(72) Erfinder: SCHOOR, Michael, 70195 Stuttgart (DE); MAYER, Marcel, 89173 Lonsee (DE); BAUR, Klaus, 88487 Mietingen (DE); LOESCH, Benedikt, 70195 Stuttgart (DE)
(86) Internationale Anmeldenummer: PCT/EP2019/055707
(87) Internationale Veröffentlichungsnummer: WO 2019/219263

(56) Entgegenhaltungen:
- DE-A1- 102014 208 899
- DE-A1- 102015 222 884
- JP-A- 2009 281 775

## Beschreibung

Die Erfindung betrifft ein Verfahren zur Phasenkalibrierung zweier Hochfrequenzbausteine eines Radarsensors, der ein durch zwei Teil-Arrays gebildetes Array von Empfangsantennen und eine Auswerteeinrichtung aufweist, die dazu ausgebildet ist, anhand von Phasendifferenzen zwischen den von den Empfangsantennen empfangenen Signalen eine Winkelschätzung für geortete Radarziele vorzunehmen, wobei jeder Hochfrequenzbaustein parallele Empfangspfade für die Signale der Empfangsantennen eines der Teil-Arrays aufweist.

In Fahrerassistenzsystemen für Kraftfahrzeuge und insbesondere in Fahrzeugführungssystemen für autonomes Fahren werden leistungsfähige Radarsensoren benötigt, die in der Lage sind, Abstände, Relativgeschwindigkeiten und Richtungswinkel (insbesondere im Azimut) von anderen Verkehrsteilnehmern, insbesondere von anderen Fahrzeugen mit hoher Genauigkeit und Verlässlichkeit zu messen.

Viele bekannte Radarsensoren für Kraftfahrzeuge arbeiten nach dem FMCW-Prinzip (Frequency Modulated Continuous Wave), bei dem die Frequenz des gesendeten Radarsignals rampenförmig moduliert wird und das empfangene Radarecho mit einem Anteil des zum aktuellen Zeitpunkt gesendeten Signals gemischt wird. Auf diese Weise erhält man ein Zwischenfrequenzsignal, dessen Frequenz dem Frequenzunterschied zwischen dem gesendeten und dem empfangenen Signal entspricht. Dieser Frequenzunterschied enthält aufgrund der Laufzeit des Radarsignals und aufgrund der Frequenzmodulation einen abstandsabhängigen Anteil, der proportional zur Rampensteigung ist. Aufgrund des Doppler-Effektes enthält der Frequenzunterschied außerdem einen Anteil, der von der Relativgeschwindigkeit des georteten Objekts abhängig ist. Durch Vergleich von Messergebnissen, die mit unterschiedlichen Rampensteigungen erhalten wurden, lassen sich die beiden Anteile voneinander trennen, so dass der Abstand d und die Relativgeschwindigkeit v eines georteten Objekts bestimmt werden können.

Es sind auch FMCW-Radarsensoren bekannt, bei denen ein einzelner Messzyklus eine Vielzahl von "schnellen" Frequenzrampen (rapid chirps) mit hoher Steigung umfasst, deren Mittenfrequenzen ihrerseits auf einer "langsamen" Rampe moduliert sind. Durch eine zweidimensionale FourierTransformation des Zwischenfrequenzsignals, einerseits über die schnellen Rampen und andererseits über die langsame Rampe, lässt sich dann eine höhere Messgenauigkeit bei der Abstands- und Relativgeschwindigkeitsmessung erreichen.

Eine Schätzung der Richtungswinkel der georteten Radarziele wird dadurch ermöglicht, dass die Empfangsantennen innerhalb des Arrays in der Richtung, in welcher der Winkel gemessen werden soll, typischerweise in der horizontalen Richtung, gegeneinander versetzt sind. Die von den einzelnen Empfangsantennen empfangenen Signale weisen dann einen Phasenunterschied auf, der vom Einfallswinkel des Radarechos abhängig ist. Die Winkelauflösung lässt sich dadurch verbessern, dass die Apertur des Arrays und Anzahl der Empfangsantennen erhöht werden. Allerdings steigt damit auch die Anzahl der Empfangskanäle, so dass die Komplexität des Empfangsteils des Hochfrequenzbausteins beträchtlich zunimmt.

Man kann auch die Apertur des Arrays vergrößern, ohne die Anzahl der Empfangsantennen zu erhöhen. In dem Fall kann es allerdings bei der Auswertung der Phasendifferenzen zu Mehrdeutigkeiten kommen, so dass sich der tatsächliche Richtungswinkel des Objekts nicht sicher bestimmen lässt. Bei einem MIMO-Radar (Multiple Input Multiple Output) weist die Sendeeinheit des Hochfrequenzbausteins mehrere Sendeantennen auf, die ebenfalls in der Horizontalen gegeneinander versetzt sind. Durch Betrieb der versetzen Sendeantennen, beispielsweise im Zeit- oder Codemultiplex-Verfahren, wird dann die Apertur des Arrays virtuell vergrößert, ohne dass die Zahl der Empfangskanäle erhöht werden muss.

Die Erfindung befasst sich mit Radarsensoren, die zwei oder mehr im wesentlichen baugleiche Hochfrequenzbausteine aufweisen. Diese Bausteine lassen sich einerseits einzeln in Radarsensoren mit geringen Leistungsanforderungen verwenden, beispielsweise in Fahrerassistenzsystemen, und lassen sich andererseits zu mehreren zusammenschalten, um einen Radarsensor mit höherer Leistung, insbesondere mit höherer Winkeltrennfähigkeit zu schaffen. Allerdings ist es im letzteren Fall erforderlich, die verschiedenen Hochfrequenzbausteine präzise miteinander zu synchronisieren, um Fehler aufgrund von Phasendifferenzen in den Empfangsteilen und/oder den Sendeteilen der verschiedenen Hochfrequenzbausteine zu vermeiden.

Grundsätzlich kann jede aktive elektronische Komponente jedes Hochfrequenzbausteins zu solchen Phasendifferenzen beitragen. Da die empfangenen Signale in den verschiedenen Empfangspfaden getrennt verarbeitet werden, können Phasendifferenzen auch zwischen den verschiedenen Empfangspfaden innerhalb desselben Hochfrequenzbausteins auftreten. Es ist möglich und üblich, den Radarsensor werksseitig so zu kalibrieren, dass die Phasendifferenzen weitgehend eliminiert werden. Wenn sich jedoch während des Betriebs des Radarsensors die Betriebsbedingungen ändern, so kann dadurch die Kalibrierung verloren gehen.

Dieses Problem stellt sich insbesondere bei Radarsensoren mit mehreren Hochfrequenzbausteinen, die notwendigerweise in gewissem räumlichen Abstand zu einander angeordnet sein müssen und deshalb aufgrund der Wärmeentwicklung im Radarsensor unterschiedliche Temperaturen haben können. Temperaturänderungen während des Betrieb des Radarsensors können deshalb aufgrund des Temperaturgangs der beteiligten elektronischen Komponenten zu Phasendifferenzen führen, die die Genauigkeit der Kalibrierung beeinträchtigen.

Aufgabe der Erfindung ist es, ein Verfahren anzugeben, das es erlaubt, die mehreren Hochfrequenzbausteine eines Radarsensors "online", also bei laufendem Betrieb des Radarsensors nachzukalibrieren.

Diese Aufgabe wird erfindungsgemäß mit den in Anspruch 1 angegebenen Merkmalen gelöst.

JP 2009-281775 A1 beschreibt ein Verfahren zur Kalibrierung zweier Empfangseinheiten eines Radarsensors, der ein durch zwei Teil-Arrays gebildetes Array von Empfangsantennen und eine Auswerteeinrichtung aufweist, die dazu ausgebildet ist, anhand von Phasendifferenzen zwischen den von den Empfangsantennen empfangenen Signalen eine Winkelschätzung für geortete Radarziele vorzunehmen, wobei jede Empfangseinheit parallele Empfangspfade für die Signale der Empfangsantennen eines der Teil-Arrays aufweist, mit den folgenden Schritten:
- analysieren der empfangenen Signale und entscheiden, ob ein Mehrziel- oder ein Einziel-Szenario vorliegt,
- im Fall eines Einziel-Szenarios, messen von Phasen der in den Teil-Arrays empfangenen Signale und Berechnen eines Phasenoffsets zwischen den beiden Teil-Arrays, und
- kalibrieren der Phasen in den beiden Empfangseinheiten anhand des berechneten Phasenoffsets.

Der Grundgedanke dieses Verfahrens besteht darin, die Phasendifferenzen zwischen Signalen aus Empfangsantennen, zu demselben Teil-Array gehören, mit entsprechenden Phasendifferenzen für Empfangsantennen zu vergleichen, die zu verschiedenen Teil-Arrays gehören. Bei korrekter Kalibrierung sollten die Phasendifferenzen nur vom Ortungswinkel des georteten Objekts und von den relativen Positionen der betreffenden Empfangsantennen abhängen aber nicht davon, zu welchem Teil-Array die Empfangsantennen gehören. Signifikante Phasendifferenzen von Teil-Array zu Teil-Array deuten deshalb auf einen Kalibrierungsfehler hin, der sich auf diese Weise erkennen und korrigieren lässt.

Ein Problem besteht jedoch darin, dass in einem Mehrziel-Szenario die Phasendifferenzen so verwischt werden, dass kein eindeutiger Phasenoffset zwischen den beiden Teil-Arrays mehr feststellbar ist. Unter einem Mehrziel-Szenario wird hier speziell eine Situation verstanden, in der zwei Ziele gleichzeitig geortet werden und die Abstände und Relativgeschwindigkeiten dieser beiden Ziele in einer solchen Beziehung zueinander stehen, dass sie zu einem Zwischenfrequenzsignal mit der nahezu gleicher Frequenz führen. Unter einem Einziel-Szenario wird dagegen eine Situation verstanden, in der nur ein einziges Objekt geortet wird oder, wenn zwei oder mehr Objekte geortet werden, deren Frequenzen im Zwischenfrequenzsignal so deutlich voneinander verschieden wird, dass sie im Spektrum des Zwischenfrequenzsignals zwei deutlich voneinander getrennte und unterscheidbare Peaks bilden.

Es sind Verfahren bekannt, mit denen sich zwischen einem Einziel-Szenario und einem - in der Praxis wesentlich seltener auftretenden - Mehrzielszenario unterscheiden lässt, beispielsweise durch Analyse des Spektrums des Zwischenfrequenzsignals und/oder vorzugsweise durch Bewertung der Güte einer Winkelschätzfunktion, die aus den gemessenen Phasendifferenzen berechnet wird und für jeden möglichen Ortungswinkel des Objekts die Wahrscheinlichkeit dafür angibt, dass sich das Objekt bei dem betreffenden Winkel befindet. Bei hoher Güte hat die Winkelschätzfunktion einen scharfen Peak bei einem bestimmten Winkel, der dann den Ortungswinkel des Objekts repräsentiert. In einem Mehrziel-Szenario ist jedoch generell der Peak über eine deutlich größere Breite "verschmiert", so dass sich der genaue Ortungswinkel weniger zuverlässig bestimmen lässt.

Anhand solcher Effekte wird zwischen einem Einziel-Szenario und einem Mehrziel-Szenario unterschieden, und eine Nachkalibrierung erfolgt nur im Fall eines Einziel-Szenarios, bei dem der Phasenoffset zwischen den beiden Teil-Arrays deutlich feststellbar ist. Zur Bestimmung dieses Phasenoffsets werden dann die Empfangssignale aus den beiden Teil-Arrays miteinander verglichen. Im Prinzip wird dabei für unterschiedliche Paarungen von Empfangsantennen die Abhängigkeit der Phasendifferenz vom Antennenabstand untersucht. Bei korrekter Kalibrierung sollte man für Antennen aus verschiedenen Teil-Arrays die gleiche Abstandsabhängigkeit erhalten wie bei Antennen aus demselben Teil-Array. Eine fehlerhafte Kalibrierung der beiden Empfangseinheiten ist dann daran zu erkennen, dass es für Antennen aus verschiedenen Teil-Arrays neben der aufgrund des Abstands zu erwartenden Phasendifferenz stets einen etwa gleich großen zusätzlichen Phasenoffset gib. Durch statistische Auswertung der Phasendifferenzen für verschiedene Paare von Empfangsantennen lassen sich statistische Schwankungen glätten, so dass man ein aussagekräftiges Maß für den zu korrigierenden Phasenoffset erhält.

Gegenstand der Erfindung ist ein Verfahren zur Phasenkalibrierung zweier Sendeeinheiten, die auf zwei verschiedenen Hochfrequenzbausteinen eines Radarsensors angeordnet sind, der ein reales Array von Empfangsantennen und eine Auswerteeinrichtung aufweist, die dazu ausgebildet ist, anhand von Phasendifferenzen zwischen den von den Empfangsantennen empfangenen Signalen eine Winkelschätzung für geortete Radarziele vorzunehmen, wobei jede Sendeeinheit mindestens eine Sendeantenne speist und die zu verschiedenen Sendeeinheiten gehörenden Sendeantennen derart in Richtung des Arrays gegeneinander versetzt sind, dass das reale Array bei Benutzung beider Sendeeinheiten um ein virtuelles Array erweitert wird, mit den folgenden folgenden Schritte:
- analysieren der empfangenen Signale und entscheiden, ob ein Mehrziel- oder ein Einziel-Szenario vorliegt,
- wenn ein Einziel-Szenario vorliegt, kalibrieren der Phasen in den beiden Sendeeinheiten; wobei zum Kalibrieren der Phasen die folgenden Schritte ausgeführt werden:
- messen von Phasen der in dem realen Array empfangenen Signale,
- bestimmen einer Geraden, die zu den gemessenen Phasen des realen Arrays am besten passt,
- extrapolieren der Geraden in das virtuelle Array,
- berechnen eines Phasenoffsets zwischen dem realen und dem virtuellen Array anhand der extrapolierten Geraden und in dem virtuellen Array gemessenen Phasen, und
- kalibrieren der Phasen in den beiden Sendeeinheiten anhand des berechneten Phasenoffsets.

Dieses Verfahren beruht auf dem gleichen Grundgedanken wie das oben beschriebene Verfahren zur Kalibrierung der Empfangseinheiten, aber mit dem Unterschied, dass nicht zwei Teil-Arrays desselben realen Arrays betrachtet werden, sondern stattdessen das (vollständige) reale Array und ein zugehöriges virtuelles Array, das dadurch entsteht, dass die Empfangsantennen des realen Arrays Signale von einer anderen Sendeantenne empfangen, so dass sich aufgrund des geänderten räumlichen Versatzes zwischen den Empfangsantennen und der Sendeantenne unterschiedliche Signalwege und damit unterschiedliche Phasenverschiebungen ergeben. Auch hier gilt, dass die Phasendifferenzen bei korrekter Kalibrierung unabhängig davon sein müssten, ob man zwei Antennen aus demselben (realen oder virtuellen) Array oder zwei Antennen aus verschiedenen Arrays betrachtet. Ein signifikanter Phasenoffset deutet deshalb auf einen Fehler in der Phasenkalibrierung der beteiligten Sendeeinheiten hin.

Vorteilhafte Ausgestaltungen und Weiterbildungen der Erfindung sind in den Unteransprüchen angegeben.

Das statistische Rauschen bei der Messung des Phasenoffsets lässt sich dadurch reduzieren, dass in die statistische Auswertung die Messergebnisse einbezogen werden, die man für eine Vielzahl aufeinanderfolgender Frequenzrampen (z.B. rapid chirps) des Sendesignals erhalten hat. Beispielsweise kann man den Medianwert oder auch den Mittelwert der Phasenoffsets auf den verschiedenen Frequenzrampen betrachten.

Je nach geforderter Genauigkeit kann die Nachkalibrierung in jedem Messzyklus oder nur in gewissen Zeitabständen erfolgen. Außerdem kann je nach Leistungsfähigkeit und Auslastung der Hardware das Ergebnis der Phasenkalibrierung entweder schon im aktuellen Messzyklus für eine genaue Winkelschätzung verwendet werden oder zunächst nur gespeichert und dann in dem nächsten Messzyklus oder in mehreren nachfolgenden Messzyklen verwendet werden.

Die Verfahren lassen sich analog auch bei Radarsensoren mit drei oder mehr Sendeinheiten einsetzen.

Im folgenden werden Ausführungsbeispiele anhand der Zeichnung näher erläutert.

Es zeigen:
- Fig. 1: ein Diagramm eines Radarsensors, bei dem die Erfindung anwendbar ist;
- Fig. 2: ein vereinfachtes Diagramm des Radarsensors, zur Erläuterung eines Verfahrens zur Phasenkalibrierung zweier Empfangseinheiten;
- Fig. 3: ein Flussdiagramm zur Erläuterung wesentlicher Schritte eines erfindungsgemäßen Verfahrens; und
- Fig. 4: ein vereinfachtes Diagramm des Radarsensors nach Fig. 1, zur Erläuterung eines Verfahrens zur Phasenkalibrierung zweier Sendeeinheiten.

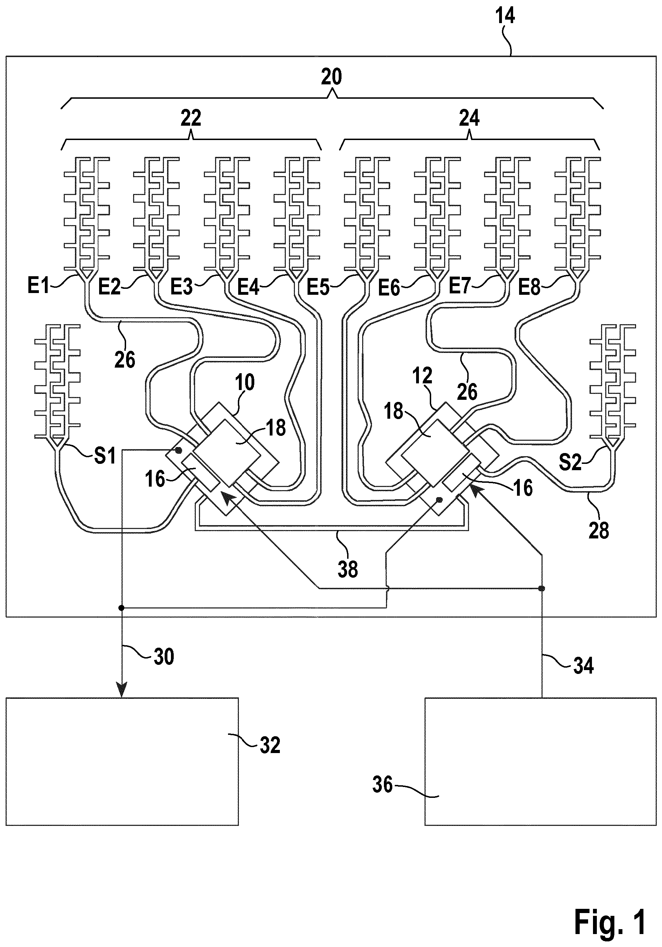

In Fig. 1 ist schematisch ein Radarsensor für Kraftfahrzeuge gezeigt, der zwei Hochfrequenzbausteine 10, 12 auf einer gemeinsamen Platine 14 aufweist. Die Hochfrequenzbausteine 10, 12 werden beispielsweise durch MMICs (Monolithic Microwave Integrated Circuits) gebildet und weisen jeweils eine Sendeeinheit 16 und eine Empfangseinheit 18 auf. Die Platine 14 weist ein Array 20 von Empfangsantennen E1 - S8 auf, die in gleichmäßigen Abständen auf einer Horizontalen angeordnet sind. Das Array 20 ist in zwei Teil-Arrays 22, 24 mit je vier Empfangsantennen unterteilt. Jede der Empfangsantennen wird durch zwei parallele, vertikal verlaufende Spalten von Antennenpatches gebildet, durch die eine gewisse Bündelung der Empfangskeule in Elevation erreicht wird. Die Empfangsantennen E1 - E4 des Teil-Arrays 22 sind über jeweilige Leiterbahnen 26 mit der Empfangseinheit 18 des Hochfrequenzbausteins 10 verbunden. Entsprechend sind die Empfangsantennen E5 - E8 des Teil-Arrays 24 mit der Empfangseinheit 18 des Hochfrequenzbausteins 12 verbunden. Die Längen der Leiterbahnen 26 sind so abgestimmt, dass sie sich allenfalls um ganzzahlige Vielfache der Wellenlänge λ der Mikrowellen unterscheiden, so dass die Phasen**beziehungen** zwischen den von den verschiedenen Empfangsantennen empfangenen Signalen auf dem Weg zu den Empfangseinheiten 18 nicht verfälscht werden.

Die Sendeeinheiten 16 der beiden Hochfrequenzbausteine 10, 12 sind jeweils durch Leiterbahnen 28 mit einer Sendeantenne S1 bzw. S2 verbunden. Die Sendeantennen S1 und S2 werden ebenfalls jeweils durch zwei vertikale Spalten von Antennenpatches gebildet und sind symmetrisch zu dem Array 20, jedoch vertikal versetzt zu diesem auf der Platine 14 angeordnet. Auch die Leiterbahnen 28 sind so angeordnet, dass die Signalwege von der Sendeeinheit 16 zur zugehörigen Sendeantenne sich allenfalls um ein ganzzahliges Vielfaches von λ unterscheiden.

Die Empfangseinheit 18 jedes Hochfrequenzbausteins 10 weist vier parallele Empfangspfade auf, die jeweils das Signal einer Empfangsantenne verarbeiten. Wie an sich bekannt ist, enthält jeder Empfangspfad einen Mischer, durch den das empfangene Signal mit einem Anteil des Sendesignals gemischt wird, das der zugehörigen Sendeantenne zugeführt wird, so dass je Empfangspfad ein Zwischenfrequenzsignal gebildet wird. Die Zwischenfrequenzsignale der beiden Empfangseinheiten 18 werden über Signalleitungen 30 einer Auswerteeinrichtung 32 zugeführt, in der die Signale weiter ausgewertet werden, um die Abstände d, die Relativgeschwindigkeiten v und die Azimutwinkel θ der georteten Radarziele zu bestimmen.

Jeder Hochfrequenzbaustein 10 ist außerdem über Steuerleitungen 34 mit einer Steuereinheit 36 verbunden, die den Betrieb der beiden Hochfrequenzbausteine 10, 12 steuert und koordiniert.

Wie üblich ist das von den Sendeeinheiten 16 erzeugte Sendesignal in seiner Frequenz rampenförmig moduliert. Die beiden Sendeeinheiten 16 werden beispielsweise im Zeitmultiplex betrieben, so dass jeweils nur eine der beiden Sendeantennen S1, S2 aktiv ist.

Die von den Empfangseinheiten 18 gelieferten Zwischenfrequenzsignale werden in der Auswerteeinheit 32 oder wahlweise auch schon in den Hochfrequenzbausteinen 10, 12 digitalisiert und über die Dauer einer Frequenzrampe aufgezeichnet. Aus den so erhaltenen (insgesamt acht) Zeitsignalen wird in der Auswerteeinrichtung 32 durch schnelle Fouriertransformation ein jeweiliges Spektrum gebildet, in dem sich jedes geortete Objekt als Peak bei einer bestimmten, vom Abstand und der Relativgeschwindigkeit des Objekts abhängigen Frequenz abzeichnet. Mit bekannten Auswerteverfahren werden die abstands- und geschwindigkeitsabhängigen Anteile voneinander getrennt, so dass man den Abstand d und die Relativgeschwindigkeit v jedes georteten Objekts bestimmen kann.

Grundsätzlich lässt sich darüber hinaus für jedes geortete Objekt anhand der Phasenbeziehungen zwischen den von den Empfangsantennen E1 - E8 empfangenen Signalen und anhand der damit korrespondierenden Phasenbeziehungen zwischen den Zwischenfrequenzsignalen der Azimutwinkel des georteten Objekts bestimmen. In der Auswerteeinrichtung 32 ist dazu ein Winkelschätzalgorithmus implementiert, der anhand der Phasenbeziehungen für jedes Objekt eine Winkelschätzfunktion (z.B. Maximum-Likelihood-Funktion) berechnet, die eine Wahrscheinlichkeitsverteilung für den Ortungswinkel des betreffenden Objekts angibt.

In einem normalen Messzyklus werden dazu auf jeder Frequenzrampe die Signale aller acht Empfangsantennen des Arrays 20 ausgewertet. Je größer die Apertur des Arrays 20 ist, desto größer ist die erreichbare Genauigkeit der Winkelschätzung.

Voraussetzung für eine unverfälschte Winkelschätzung ist jedoch, dass die Phasenbeziehungen zwischen den Signalen der acht Empfangsantennen im Verlauf des Signalempfangs und der Signalauswertung nicht verfälscht werden. Da jeder der beiden Hochfrequenzbausteine 10, 12 nur vier der insgesamt acht Empfangssignale verarbeitet, müssen die beiden Hochfrequenzbausteine präzise miteinander synchronisiert sein. Zu diesem Zweck sind die beiden Hochfrequenzbausteine durch eine Synchronisationsleitung 38 miteinander verbunden. Durch die Synchronisation muss zum einen erreicht werden, dass die Mischer, mit denen die Empfangssignale in den Mischern der beiden Empfangseinheiten 18 mit phasengleichen Sendesignalanteilen gemischt werden. Wenn beispielsweise die Sendeantenne S1 aktiv ist, kann zu Synchronisationszwecken das im Hochfrequenzbaustein 10 erzeugte Sendesignal an den Hochfrequenzbaustein 12 übermittelt werden, wobei sicherzustellen ist, dass die Signallaufzeit bei dieser Übermittlung nicht zu einem Phasenversatz führt. Alternativ können auch die Mischer in den Empfangseinheiten 18 der beiden Hochfrequenzbausteine jeweils ein Signal erhalten, das von der lokalen Sendeeinheit 16 erzeugt wird. In dem Fall müssen jedoch die Oszillatoren der beiden Sendeeinheiten 16 miteinander synchronisiert werden.

Grundsätzlich kann auch jede der aktiven elektronischen Komponenten in den insgesamt acht Empfangspfaden eine gewisse Phasenverschiebung verursachen, so dass es zwischen den Empfangspfaden zu Phasendifferenzen kommen kann, die das Ergebnis der Winkelschätzung verfälschen. Sofern diese Phasenverschiebungen zeitlich stabil sind, können sie vor Inbetriebnahme des Radarsensors bereits werkseitig gemessen und durch geeignete Kalibrierungsmaßnahmen beseitigt oder durch entsprechende Korrekturen bei der Signalauswertung kompensiert werden.

Wenn jedoch die Betriebsbedingungen, unter denen die Hochfrequenzbausteine 10 und 12 arbeiten, während des Betriebs des Radarsensors nicht stabil sind, so können sich die Phasendifferenzen im Laufe der Zeit verändern, so dass auch durch eine anfängliche Kalibrierung des Radarsensors Messfehler nicht dauerhaft eliminiert werden können.

Eine wesentliche Ursache für zeitliche Änderungen der Phasendifferenzen sind Temperaturschwankungen, die die Funktionsweise der aktiven elektronischen Komponenten in den beiden Hochfrequenzbausteinen beeinflussen. Phasendifferenzen können dann zum einen dadurch entstehen, dass sich die beiden Hochfrequenzbausteine 10, 12 während des Betriebs unterschiedlich stark erwärmen. Zum anderen ist auch denkbar, dass die elektronischen Komponenten in den beiden Halbleiterbausteinen unterschiedlich auf Temperaturschwankungen reagieren.

Bei hohen Genauigkeitsanforderungen ist es deshalb erforderlich, die Phasenkalibrierung der Empfangseinheiten 18 und auch der Sendeeinheiten 16 der beiden Hochfrequenzbausteine 10, 12 während des Betriebs von Zeit zu Zeit zu prüfen und gegebenenfalls zu korrigieren.

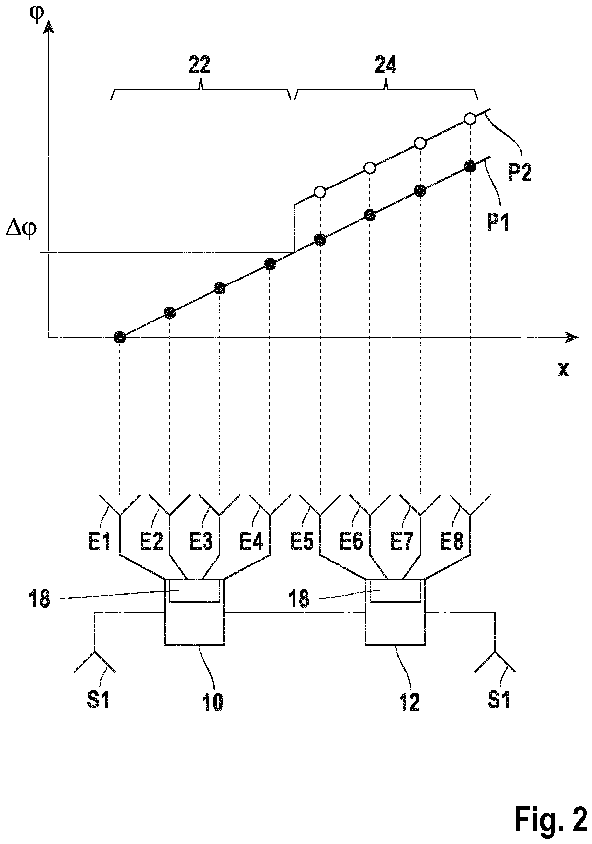

Ein nicht beanspruchtes Verfahren für eine solche Nachkalibrierung der Empfangseinheiten 18 soll unter Bezugnahme auf Fig. 2 erläutert werden, die ein vereinfachtes Diagramm des oben beschriebenen Radarsensors zeigt und in der zusätzlich für ein einzelnes geortetes Radarziel, dessen Radarecho unter einem bestimmten Azimutwinkel θ empfangen wird, die Phasen φ der von den Empfangsantennen E1 - E8 empfangenen Signale als Funktion des Ortes x dieser Empfangsantennen (in der Horizontalen) aufgetragen sind. Dabei wird angenommen, dass etwaige Phasendifferenzen zwischen den vier Empfangspfaden in jeder Empfangseinheit 18 durch eine Anfangskalibrierung beseitigt wurden, so dass aufgrund von Temperaturschwankungen nur noch Phasendifferenzen zwischen den Empfangspfaden im Hochfrequenzbaustein 10 einerseits und den Empfangspfaden im Hochfrequenzbaustein 12 andererseits zu erwarten sind.

In dem hier betrachteten Beispiel sind die Empfangsantennen E1 bis E8 des Arrays 20 in der Richtung x in gleichmäßigen Abständen angeordnet. Bei schrägem Einfall des Radarechos unter einem bestimmten Azimutwinkel sollten deshalb bei korrekter Kalibrierung die Phasen der in den acht Empfangsantennen empfangenen Signalen als Funktion des Ortes x auf einer Geraden liegen, wie in Fig. 2 durch schwarze Punkte und den Graphen P1 angegeben wird. Die Steigung dieser Geraden ist vom Einfallswinkel des Radarechos abhängig. Bei senkrechtem Einfall (Azimutwinkel 0°) würde die Gerade in Fig. 2 waagerecht verlaufen. Wenn es nun aufgrund unterschiedlicher Temperaturen der Hochfrequenzbausteine 10, 12 und der darin enthaltenen Empfangseinheiten 18 zu Phasendifferenzen zwischen den in den verschiedenen Empfangseinheiten gemessenen Phasen kommt, so führt dies zu einem Phasenoffset Δφ zwischen den Phasen im Array 22 einerseits und den Phasen im Array 24 andererseits, wie in Fig. 2 durch weiße Punkte und den Graphen P2 angegeben wird. Die Phasendifferenzen von Antenne zu Antenne innerhalb jedes Teil-Arrays bleiben dagegen unverändert. Anhand dieses charakteristischen Musters lässt sich der Phasenoffset feststellen und quantifizieren und durch entsprechende Nachkalibrierung kompensieren.

Allerdings illustriert Fig. 2 den Idealfall, in dem die gemessenen Phasen nicht verrauscht und durch Interferenzeffekte verfälscht sind.

Interferenzeffekte treten insbesondere in einem Mehrziel-Szenario auf, in dem zwei oder mehr Radarziele gleichzeitig geordnet werden und die zugehörigen Peaks im Spektrum des Zwischenfrequenzsignals so breit sind und/oder so nahe beieinander liegen, dass sich die Peaks überlagern und nicht mehr trennen lassen. In einem solchen Fall ist bei einer üblichen Winkelschätzung auf der Basis aller acht Empfangssignale die Güte der Winkelschätzfunktion deutlich kleiner als bei einem Einziel-Szenario. Die Mehrziel-Szenarien, die im Vergleich zu den Einziel-Szenarien nur relativ selten auftreten, lassen sich daher anhand der Güte der Winkelschätzfunktion identifizieren, so dass sie bei der Berechnung des Phasenoffsets ausgeschlossen werden können.

Das statistische Rauschen lässt sich zunächst dadurch unterdrücken, dass man die Phasen und Phasendifferenzen für unterschiedliche Paarungen von Empfangsantennen statistisch auswertet. Beispielsweise kann man in Fig. 2 zunächst anhand der vier Messpunkte für das Teil-Array 22 den Verlauf der Geraden (Graph P1) bestimmen, der am besten zu den Messergebnissen passt, und diese Gerade dann in das Teil-Array 24 extrapolieren, um die erwarteten Phasen für die Empfangsantennen E5 bis E8 zu bestimmen (schwarze Punkte). Diese erwarteten Phasen lassen sich dann für jede Empfangsantenne mit der tatsächlich gemessenen Phase (weiße Punkte) vergleichen, und durch Mittelung über die vier erhaltenen Differenzen erhält man einen realistischen Wert für den Phasenoffsett Δφ. Diese Art der Auswertung ist analog auch in den Fällen möglich, in denen die Abstände zwischen den Empfangsantennen nicht alle gleich sind.

Die oben beschriebene Auswertung lässt sich im Prinzip für jede Frequenzrampe des Sendesignals vornehmen. Durch statistische Auswertung der Ergebnisse für mehrere aufeinanderfolgende Rampen (beispielsweise durch Medianbetrachtung) lässt sich dann die statistische Fluktuation weiter unterdrücken und somit die Genauigkeit des erhaltenen Wertes für den Phasenoffset Δφ weiter verbessern.

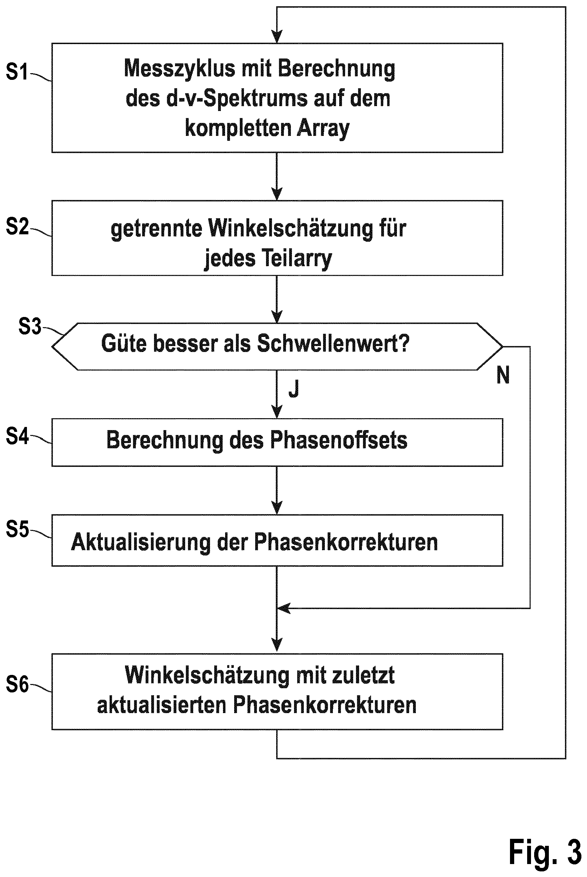

In Fig. 3 sind die wesentlichen Schritte eines Verfahrens zur Kalibrierung der Empfangseinheiten 18 in einem Flussdiagramm dargestellt.

Es Schritt S1 wird ein "normaler" Messzyklus ausgeführt, um die Abstände d und die Relativgeschwindigkeiten v sowie ggf. auch die Ortungswinkel der georteten Radarziele zu bestimmen. Das in dem Messzyklus erzeugte Sendesignal kann eine Vielzahl aufeinanderfolgender Frequenzrampen mit gleicher Steigung und ggf. unterschiedlichen Mittenfrequenzen umfassen, und die Berechnung der Abstände und Relativgeschwindigkeiten kann auf der Gesamtheit der auf diesen Rampen empfangenen Signale beruhen. Für die Winkelschätzung genügt im Prinzip eine Auswertung der Signale auf einer oder wenigen Frequenzrampen, doch wird man vorzugsweise auf eine möglichst große Datenmenge zurückgreifen, um das Signal-Rausch-Verhältnis zu verbessern.

In Schritt S2 werden getrennte Winkelschätzungen für die beiden Teil-Arrays 22, 24 vorgenommen. Dabei wird eine Winkelschätzfunktion auf der Basis der Signale der Empfangsantennen E1 bis E4 berechnet, und eine weitere Winkelschätzfunktion wird auf der Basis der Signale der Empfangsantennen E5 bis E8 berechnet. Auch bei fehlerhafter Kalibrierung der beiden Empfangseinheiten 18 sollten die Ergebnisse dieser Winkelschätzungen im wesentlichen übereinstimmen, da sich der Kalibrierungsfehler nicht auf die Phasendifferenzen zwischen Empfangsantennen innerhalb desselben Teil-Arrays auswirkt. Die Trennschärfe dieser Winkelschätzungen ist jedoch begrenzt, da die Apertur der benutzen Teil-Arrays jeweils nur die Hälfte der Apertur des gesamten Arrays 20 beträgt.

Für jede der beiden Winkelschätzfunktionen wird die Güte berechnet, und in Schritt S3 wird geprüft, ob die Güte für beide Winkelschätzfunktionen oberhalb eines bestimmten Schwellenwertes liegt. Dieser Schwellenwert ist so gewählt, dass eine Güte oberhalb dieses Schwellenwertes normalerweise nur in einem Einziel-Szenario erhalten wird, in dem die empfangenen Signale, die im Spektrum des Zwischenfrequenzsignals zu einem Peak bei einer bestimmten Frequenz führen, nur von einem einzigen Reflexionszentrum stammen, so dass ein deutlicher Phasenoffset zwischen den in den verschiedenen Teil-Arrays empfangenen Signalen feststellbar ist.

Wenn diese Bedingung erfüllt ist (J), wird in Schritt S4 der Phasenoffset ΔΦ mit Hilfe der anhand von Fig. 2 erläuterten Prozedur berechnet, und in Schritt S5 wird anhand dieses Phasenoffsets die Phasenkalibrierung korrigiert.

Im Prinzip könnte die Korrektur der Kalibrierung dadurch erfolgen, dass in einer der beiden Empfangseinheiten aktive elektronische Komponenten so angesteuert werden, dass die in den Empfangsfaden verarbeiteten Signale entsprechend dem Phasenoffset verschoben werden. Bevorzugt erfolgt die Phasenkalibrierung jedoch rein rechnerisch, indem der Phasenoffset ΔΦ von den Phasen für die Signale aus einem der beiden Teil-Arrays subtrahiert wird. Das hat den Vorteil, dass in den Empfangseinheiten keine zusätzlichen aktiven elektronischen Komponenten benötigt werden.

Wenn in Schritt S3 ein Mehrziel-Szenario festgestellt wurde (N), so werden die Schritte S4 und S5 übersprungen. In Schritt S6 wird dann - sowohl bei einem Einziel-Szenario als auch bei einem Mehrziel-Szenario - eine Winkelschätzung auf der Grundlage aller acht Empfangssignale des kompletten Arrays 20 durchgeführt, nun aber unter Verwendung der Phasenkorrekturen, die in Schritt S5 aktualisiert wurden. Danach erfolgt ein Rücksprung zu Schritt S1, so dass ein nächster Messzyklus ausgeführt werden kann.

In einer modifizierten Ausführungsform kann der Schritt S6 auch in den Schritt S1 integriert sein. In dem Fall werden die in Schritt S5 aktualisierten Phasenkorrekturen noch nicht im aktuellen Messzyklus wirksam, sondern erst in Schritt S1 des nachfolgenden Messzyklus.

In noch einer weiteren Ausführungsform werden die Schritte S2 bis S5 nicht in jedem Messzyklus ausgeführt, sondern nur in gewissen Zeitabständen, die größer sind als die Dauer eines einzelnen Messzyklus von typischerweise 50 ms.

Der hier in Fig. 1 als Beispiel gezeigte Radarsensor ist ein MIMO-Radarsensor, bei dem die beiden Sendeeinheiten 16 beispielsweise im Zeitmultiplex arbeiten, so dass zu jedem Zeitpunkt nur eine der beiden Sendeantennen S1 und S2 aktiv ist. Dadurch wird eine virtuelle Vergrößerung der Apertur des Antennenarrays und damit eine größere Winkeltrennfähigkeit erreicht.

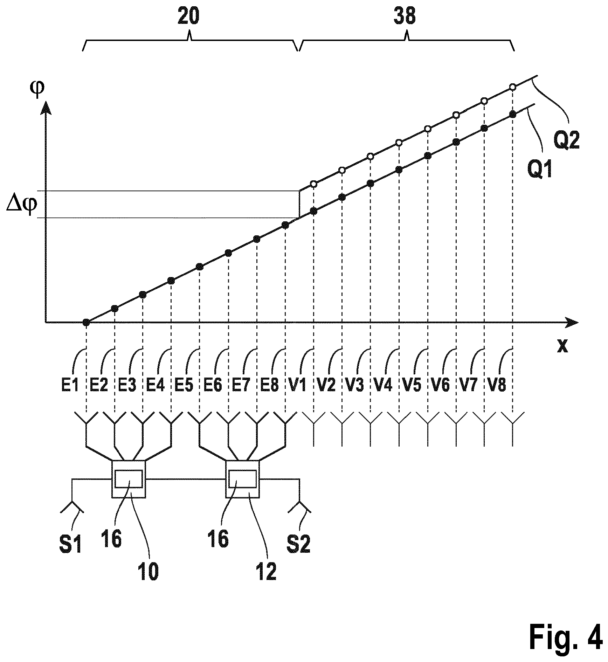

Die Phasen der in den Empfangsantennen E1 bis E8 empfangenen Signale sind abhängig von der Gesamtlänge des Signalweges von der Sendeantenne S1 oder S2, die gerade das Sendesignal sendet, zu dem Radarziel und vom Radarziel zurück zu der jeweiligen Empfangsantenne. Diese Phasen sind deshalb nicht nur von den Positionen der Empfangsantennen E1 - E8 in x-Richtung abhängig, sondern auch von der x-Position der gerade benutzen Sendeantenne. Wenn beispielsweise die Sendeantenne S2 aktiv ist, so erhält man für die Phasen der in den Empfangsantennen E1 - E8 empfangenen Signale die Werte, die in Fig. 4 für diese Empfangsantennen graphisch dargestellt sind. Wenn nun auf die Sendantenne S1 umgeschaltet wird, so hat das auf die Phasen der empfangenen Signale die gleiche Wirkung als wenn die Empfangsantennen E1 - E8 um den Abstand zwischen den Sendeantennen S1 und S2 nach rechts (positive x-Richtung) verschoben worden wären. Diese verschobenen Positionen der Empfangsantennen bilden somit ein virtuelles Array 38 mit virtuellen Empfangsantennen V1 - V8.

Die Positionen der Sendeantennen S1 und S2 sind hier so gewählt, dass der Abstand zwischen der Empfangsantenne E8 und der ersten virtuellen Antenne V1 der gleiche ist wie der Abstand zwischen zwei benachbarten Empfangsantennen. Wenn man nun die empfangenen Signale in den Aktivitätsphasen der Sendeantennen S1 und S2 gemeinsam betrachtet, so erhält man für die Signale in den virtuellen Antennen V1 bis V8 bei korrekter Kalibrierung die Phasen, die auf der gleichen Geraden (Graph Q1) liegen wie die Phasen für das reale Array 20. Wenn jedoch zwischen den von den Sendeeinheiten 16 der beiden Hochfrequenzbausteine erzeugten Sendesignalen eine Phasendifferenz besteht, so ergibt sich ein entsprechender Phasen-Offset ΔΦ für die Phasen, die einerseits im realen Array 20 und andererseits im virtuellen Array 38 empfangen werden (Graph Q2 in Fig. 4). Wenn man nun eine Winkelschätzung auf der Basis der kombinierten Arrays 20 und 26 ausführt, um durch die Verdopplung der Apertur eine bessere Winkeltrennung zu erreichen, so würde das Ergebnis der Winkelschätzung durch den Phasenoffset ΔΦ verfälscht.

Dieser Kalibrierungsfehler zwischen den Sendeeinheiten 16 lässt sich jedoch erfindungsgemäß nach dem gleichen Prinzip korrigieren, dass oben in Verbindung mit Figuren 2 und 3 für die Empfangseinheiten 18 erläutert wurde. Wenn ein Einziel-Szenario festgestellt wurde, wird der Phasenoffset Δϕ gemessen, und dieser Phasenoffset wird dann für eine entsprechende Phasenkorrektur bei der eigentlichen Winkelschätzung verwendet.

## Patentansprüche

1. Verfahren zur Phasenkalibrierung zweier Sendeeinheiten (16), die auf zwei verschiedenen Hochfrequenzbausteinen (10, 12) eines Radarsensors angeordnet sind, der ein reales Array (20) von Empfangsantennen (E1 - E8) und eine Auswerteeinrichtung (32) aufweist, die dazu ausgebildet ist, anhand von Phasendifferenzen zwischen den von den Empfangsantennen empfangenen Signalen eine Winkelschätzung für geortete Radarziele vorzunehmen, wobei jede Sendeeinheit (16) mindestens eine Sendeantenne (S1, S2) speist und die zu verschiedenen Sendeeinheiten gehörenden Sendeantennen derart in Richtung des Arrays (20) gegeneinander versetzt sind, dass das reale Array (20) bei Benutzung beider Sendeeinheiten um ein virtuelles Array (38) erweitert wird, mit den Schritten:
- analysieren der empfangenen Signale und entscheiden, ob ein Mehrziel- oder ein Einziel-Szenario vorliegt,
- wenn ein Einziel-Szenario vorliegt, kalibrieren der Phasen in den beiden Sendeeinheiten (16);
wobei zum Kalibrieren der Phasen die folgenden Schritte ausgeführt werden:
- messen von Phasen der in dem realen Array (20) empfangenen Signale
- bestimmen einer Geraden, die zu den gemessenen Phasen des realen Arrays am besten passt,
- extrapolieren der Geraden in das virtuelle Array (38),
- Berechnen eines Phasenoffsets (Δϕ) zwischen dem realen (20) und dem virtuellen Array (38) anhand der extrapolierten Geraden und der in dem virtuellen Array gemessenen Phasen, und
- kalibrieren der Phasen in den beiden Sendeeinheiten (16) anhand des berechneten Phasenoffsets.

2. Verfahren nach Anspruch 1, bei dem für die Entscheidung, ob ein Mehrziel- oder ein Einziel-Szenario vorliegt, die Güte einer Winkelschätzfunktion bewertet wird.

3. Verfahren nach den Ansprüchen 1 und 2, bei dem getrennte Winkelschätzfunktionen für das reale Array (20) und das virtuelle Array (38) berechnet werden und die Güte beider Winkelschätzfunktionen bewertet wird.

4. Verfahren nach einem der vorstehenden Ansprüche, für einen FMCW-Radarsensor, bei dem das Sendesignal in jedem Messzyklus gemäß einer Folge von mehreren aufeinanderfolgenden Frequenzrampen moduliert wird, bei dem in jedem Messzyklus mehrere Phasenoffsets bestimmt werden, jeweils für eine der Frequenzrampen, und die gemessenen Phasenoffsets statistisch ausgewertet werden, um einen Korrekturwert für die Phasenkalibrierung zu bilden.

5. Verfahren nach einem der vorstehenden Ansprüche, bei dem in jedem Messzyklus eine Phasenkalibrierung vorgenommen wird.

6. Verfahren nach Anspruch 5, bei dem in jedem Messzyklus eine Winkelschätzung auf der Grundlage von Phasenkorrekturwerten ausgeführt wird, die in demselben Messzyklus durch die Phasenkalibrierung erhalten wurden.

7. Radarsensor mit zwei Sendeeinheiten (16), einem realen Array (20) von Empfangsantennen (E1 - E8), eine Auswerteeinrichtung (32), die dazu ausgebildet ist, anhand von Phasendifferenzen zwischen den von den Empfangsantennen empfangenen Signalen eine Winkelschätzung für geortete Radarziele vorzunehmen, und mit einer Steuereinheit (36) zur Steuerung der Funktionen des Radarsensors, wobei jede Sendeeinheit (16) mindestens eine Sendeantenne (S1, S2) speist und die zu verschiedenen Sendeeinheiten gehörenden Sendeantennen derart in Richtung des Arrays (20) gegeneinander versetzt sind, dass das reale Array (20) bei Benutzung beider Sendeeinheiten um ein virtuelles Array (38) erweitert wird, **dadurch gekennzeichnet, dass** die Steuereiheit (36) dazu ausgebildet ist, das Verfahren nach Anspruch 1 auszuführen.

## Claims

1. Method for the phase calibration of two transmitting units (16) which are arranged on two different high-frequency modules (10, 12) of a radar sensor having a real array (20) of receiving antennas (E1 - E8) and an evaluation device (32) which is designed to carry out an angle estimation for located radar targets on the basis of phase differences between the signals received by the receiving antennas, wherein each transmitting unit (16) feeds at least one transmitting antenna (S1, S2) and the transmitting antennas belonging to different transmitting units are offset with respect to each other in the direction of the array (20) in such a way that the real array (20) is extended by a virtual array (38) when using both transmitting units, having the steps of:
- analysing the received signals and deciding whether there is a multi-target or a single-target scenario,
- if there is a single-target scenario, calibrating the phases in the two transmitting units (16);
wherein the following steps are performed in order to calibrate the phases:
- measuring phases of the signals received in the real array (20),
- determining a straight line that best matches the measured phases of the real array,
- extrapolating the straight line into the virtual array (38),
- calculating a phase offset between the real array (20) and the virtual array (38) on the basis of the extrapolated straight line and the phases measured in the virtual array, and
- calibrating the phases in the two transmitting units (16) on the basis of the calculated phase offset.

2. Method according to Claim 1, in which the quality of an angle estimation function is assessed for the decision as to whether there is a multi-target or a single-target scenario.

3. Method according to Claims 1 and 2, in which separate angle estimation functions are calculated for the real array (20) and the virtual array (38) and the quality of both angle estimation functions is assessed.

4. Method according to one of the preceding claims, for an FMCW radar sensor, in which the transmission signal is modulated in each measurement cycle according to a sequence of a plurality of successive frequency ramps, in which a plurality of phase offsets are determined in each measurement cycle for one of the frequency ramps in each case, and the measured phase offsets are statistically evaluated in order to form a correction value for the phase calibration.

5. Method according to one of the preceding claims, in which a phase calibration is carried out in each measurement cycle.

6. Method according to Claim 5, in which an angle estimation is carried out in each measurement cycle on the basis of phase correction values obtained from the phase calibration in the same measurement cycle.

7. Radar sensor having two transmitting units (16), a real array (20) of receiving antennas (E1 - E8), an evaluation device (32) which is designed to carry out an angle estimation for located radar targets on the basis of phase differences between the signals received by the receiving antennas, and having a control unit (36) for controlling the functions of the radar sensor, wherein each transmitting unit (16) feeds at least one transmitting antenna (S1, S2) and the transmitting antennas belonging to different transmitting units are offset with respect to each other in the direction of the array (20) in such a way that the real array (20) is extended by a virtual array (38) when using both transmitting units, **characterized in that** the control unit (36) is designed to carry out the method according to Claim 1.

## Revendications

1. Procédé d'étalonnage de phase de deux unités émettrices (16) disposées sur deux modules haute fréquence différents (10, 12) d'un capteur radar qui comporte un réseau réel (20) d'antennes réceptrices (E1 - E8) et un dispositif d'évaluation (32) qui est conçu pour réaliser une estimation angulaire de cibles radar localisées sur la base de différences de phase entre les signaux reçus par les antennes réceptrices, chaque unité émettrice (16) alimentant au moins une antenne émettrice (S1, S2) et les antennes émettrices qui appartiennent à différentes unités émettrices étant décalées les unes par rapport aux autres dans la direction du réseau (20) de telle sorte que le réseau réel (20) est étendu par un réseau virtuel (38) lors de l'utilisation des deux unités émettrices, comprenant les étapes suivantes consistant à :
- analyser les signaux reçus et décider si un scénario à cibles multiples ou à cible unique est présent,
- lorsqu'un scénario à cible unique est présent, étalonner les phases dans les deux unités émettrices (16) ;
les étapes suivantes étant effectuées pour étalonner les phases :
- mesurer des phases des signaux reçus dans le réseau réel (20),
- déterminer une droite qui est la mieux ajustée aux phases mesurées du réseau réel,
- extrapoler les droites dans le réseau virtuel (38),
- calculer un décalage de phase entre le réseau réel (20) et le réseau virtuel (38) à partir de la droite extrapolée et des phases mesurées dans le réseau virtuel, et
- étalonner les phases dans les deux unités émettrices (16) sur la base du décalage de phase calculé.

2. Procédé selon la revendication 1, dans lequel la qualité d'une fonction d'estimation angulaire est évaluée pour décider si un scénario à cibles multiples ou à cible unique est présent.

3. Procédé selon les revendications 1 et 2, dans lequel des fonctions d'estimation angulaire séparées pour le réseau réel (20) et le réseau virtuel (38) sont calculées et la qualité des deux fonctions d'estimation angulaire est évaluée.

4. Procédé selon l'une quelconque des revendications précédentes, destiné à un capteur radar FMCW, dans lequel le signal d'émission est modulé lors de chaque cycle de mesure selon une séquence de plusieurs rampes de fréquence successives, plusieurs décalages de phase étant respectivement déterminés lors de chaque cycle de mesure pour l'une des rampes de fréquence, et les décalages de phase mesurés étant évalués statistiquement pour établir une valeur de correction pour l'étalonnage de phase.

5. Procédé selon l'une quelconque des revendications précédentes, dans lequel un étalonnage de phase est effectué lors de chaque cycle de mesure.

6. Procédé selon la revendication 5, dans lequel, lors de chaque cycle de mesure, une estimation angulaire est effectuée sur la base de valeurs de correction de phase obtenues lors du même cycle de mesure par l'étalonnage de phase.

7. Capteur radar comprenant deux unités émettrices (16), un réseau réel (20) d'antennes réceptrices (E1 - E8), un dispositif d'évaluation (32) qui est conçu pour effectuer une estimation angulaire de cibles radar localisées sur la base de différences de phase entre les signaux reçus par les antennes réceptrices, et comprenant une unité de commande (36) destinée à commander les fonctions du capteur radar, chaque unité émettrice (16) alimentant au moins une antenne émettrice (S1, S2) et les antennes émettrices qui appartiennent à différentes unités émettrices étant décalées les unes par rapport aux autres dans la direction du réseau (20) de telle sorte que le réseau réel (20) est étendu par un réseau virtuel (38) lors de l'utilisation des deux unités émettrices, **caractérisé en ce que** l'unité de commande (36) est conçue pour mettre en œuvre le procédé selon la revendication 1.
